# EUROPEAN PATENT SPECIFICATION

(11) **EP 2 893 795 B1**
(45) Date of publication and mention of the grant of the patent: **21.11.2018**
(21) Application number: 15150705.0
(22) Date of filing: 09.01.2015
(51) Int. Cl.: A01M 9/00, A01C 15/02, A01C 7/02

(54) **Spreader for spreading granular or micro-granular material on the ground**
Vorrichtung zum Streuen von granularem oder mikroganularem Material auf den Boden
Distributeuer pour matériaux granulaires ou microgranulaires sur terre

(30) Priority: 14.01.2014 IT PN20140002
(43) Date of publication of application: 15.07.2015
(73) Proprietor: Sut, Livio, 33078 San Vito al Tagliamento (PN) (IT)
(72) Inventor: Sut, Livio, 33078 San Vito al Tagliamento (PN) (IT)
(74) Representative: Gonella, Mario

(56) References cited:
- EP-A1- 0 277 288
- EP-A2- 0 934 689
- US-A- 2 906 539
- US-A- 4 911 090
- US-A1- 2012 312 211

## Description

### TECHNICAL FIELD OF THE INVENTION

. The present invention relates to a spreader for the controlled spreading on the ground under gravity of granular or micro-granular material to be employed in particular, but not exclusively, in the agricultural sector such as seeds, fertilizers or pesticides.

### PRIOR ART TECHNIQUE

. Often, in the agricultural sector, it is necessary to spread on the ground granular or micro-granular products for agriculture such as seeds, pesticides, insecticides, weed killers, fungicides or fertilizers, usually having an essentially homogeneous dimension depending on their specific application. In general, granular materials are products having granules of a size between 0.2 and 8 mm and micro-granular materials are products having granules of a size between 0.2 and 2 mm.

. These materials are usually distributed by means of suitable apparatuses, called granulators or micro-granulators, comprising a storage tank having a suitable capacity connected to one or more dosing devices adapted to transfer the product to be distributed to corresponding delivery conduits, each usually formed of one or more tubular portions, generally made of polymeric material, of a fixed length or telescopic, joined by means of flexible joints. The end portion of said delivery conduits is instead, generally, made of metal and is shaped so that the relative free end, through which the suitably dosed material is spread on the ground in a controlled way, is positioned adjacent to the ground.

. Said apparatuses are generally mounted onto multi-purpose agricultural machineries operating on several rows, adapted to carry out, in only one travel, a plurality of operations, such as opening a furrow, sowing, transplanting, fertilizing and spreading pesticides.

. Though there are on the market micro-granulators operating thanks to pneumatic systems, the most common apparatuses work under gravity; therefore, in order to allow the granular material to pass through the delivery conduit with a sufficient speed to prevent the latter from being obstructed it is necessary that the same has a high incline, and in particular that at least the end portion of the delivery conduit is basically vertical.

**.** Generally, the granular material has to be spread on the ground the most homogeneously possible within strips of pre-set breadth, variable between few millimeters up to a maximum of about 50 cm. Sometimes, the required discharging precision on the ground is very high: for example, if it is desired to spread on the ground a granular or micro-granular anti-parasitic chemical agent, the more effective this will be the more evenly it will be spread in an area having a pre-set breadth with respect to the position of the seeds previously or subsequently placed on the ground. Therefore, the material which does not reach this area precisely, besides being not useful to its purpose, it causes an economical loss and an environmental damage.

. For this reason, accessories commonly called "spreaders" are very often associated to the free ends of the delivery conduits; said spreaders can have various forms and sizes and adapted to spread the granular material on the ground the most evenly possible, widening the outlet width with respect to the size of the section of the delivery conduit as well.

. For example, Canadian patent CA1163655 shows a spreader for granular material associable to the free end of the delivery conduit to even the spreading of the same material. Said spreader comprises an inclined surface whereon the flow of the material hits when falling under gravity inside the conduit, being deflected and consequently spread on the ground; a conical hood is placed to protect said inclined surface in order to prevent possible wind effect and to increase the spreader efficiency.

. Another known spreader is described in US patent application US2011/0174898; it comprises a cylindrical body adapted to be associated to the end portion of the delivery conduit of a micro-granulator, having an open end on an oval-shaped inclined plane and positioned at 45° with respect to the symmetry plane of the cylindrical body. The surface of the inclined plane might also not be flat.

. Such spreaders, however, are applied externally to the delivery conduit and therefore involve bulks. Furthermore, for the same reason, they are subject to bumps and damages. And further, the aforementioned spreaders are not versatile as they cannot be adapted according to the kind of material to be spread, to the distribution shaping to be obtained on the ground and to the breadth of the discharging strip depending on the user's needs.

. The document US4911090 relates to a spreader comprising an end portion having a square cross-section and provided with a couple of inner deflecting elements placed on two facing walls, preferably front and rear, in a staggered position, in order to equalize the flow of the material to be spread.

**.** However, such spreader does not work in an optimal way: in fact, as the end portion has a square cross-section, the flow of the material mainly canalize itself in correspondence of the corners preventing a correct equalization. Furthermore, the number of deflectors is insufficient in order to obtain the desired effect. US 2,906,539, on which the preamble of claim 1 is based, discloses a farm implement adapted to deposit granular material over a field.

### SUMMARY OF THE INVENTION

**.** The main task of the object of the present invention is that of overcoming the inconveniences of the known art devising a spreader for granular or micro-granular material which allows to improve the spreading efficiency of the material on the ground, hence avoiding losses.

**.** In the aforementioned field, an important object is that of providing a very versatile spreader, that is which can be installed and adapted/modified by the user as well in an easy and immediate way depending on the various operative conditions and on the kinds of material to be spread on the ground.

**.** A very important object of the invention is that of realizing a spreader which allows to spread on the ground a granular or micro-granular material homogeneously along the whole length of the discharging strip.

**.** Another object of the invention consists in providing a spreader for granular or micro-granular material which allows to deliver, in a precise way, such material within a strip having a pre-set breadth, without losses.

**.** A further object of the present invention is that of providing a spreader which is compact, that is which reduces its bulk so as to be easily installed on different types of machines, and which is scarcely subject to bumps and damages.

**.** Not the least object is that of devising a spreader for granular or micro-granular material which achieves the aforementioned task and purposes making use of the usual and known plants, machineries and equipment.

**.** The aforementioned task and objects, and others which will be described later, are reached by a spreader for granular and micro-granular materials as defined by claim 1.

### BRIEF DESCRIPTION OF DRAWINGS

**.** Advantages and characteristics of the invention will become more apparent by the following description, for exemplification only and not limited to, with reference to the appended figures, wherein:

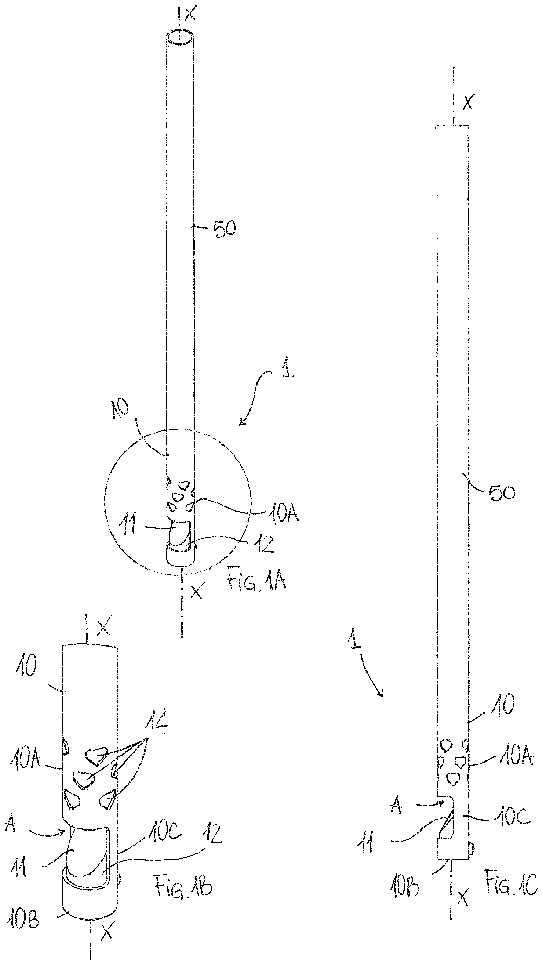

- figure 1A shows a perspective view of a spreader according to the present invention;
- figure 1B shows a circled detail of figure 1A suitably enlarged;
- figure 1C shows a side view of a spreader according to the present invention;
- figure 2A is a front view of a spreader the preceding figures thereof;
- figure 2B shows a spreader according to the present invention, in a section along the plane B-B of figure 2A;
- figure 2C shows a circled detail of figure 2B suitably enlarged;
- figure 2D shows a spreader according to the present invention, in a section along plane D-D of figure 2A;
- figure 3 shows an exploded view of a spreader according to the present invention,
- figure 4 shows an exploded view of a spreader according to the present invention comprising an advantageous accessory;
- figures 5A, 5B, 5C, 5D show, each one in a perspective, front and side view, possible configurations of an inclined surface of a spreader according to the present invention;
- figures 6A and 6B show a sectional and a perspective view of an alternative embodiment of a spreader according to the invention,
- figure 7 shows a particular embodiment of a spreader which is not claimed.

### DETAILED DESCRIPTION OF THE INVENTION

. With reference to the above mentioned figures, there is shown a spreader 1 according to the present invention for the controlled spreading of granular or micro-granular material of various kind on the ground, to be used in particular but not exclusively, in the agricultural sector, such as seeds, fertilizers, insecticides, weed killers, fungicides, pesticides or soil improvers.

. Said granular or micro-granular material is generally loaded into a storage container mounted, for example, on an agricultural machinery operating on several rows and, by means of a delivery conduit, it is spread on the ground in a controlled but not precise way. The material has to be spread within well defined discharging or sowing areas, usually formed by basically uninterrupted strips having length L and breadth B.

. Of course, depending on the kind of material to be spread on the ground the operational conditions may differ, and in particular the breadth B of the discharging strip; what is wanted to be achieved is a homogeneous discharging, that is regular and constant along the length L of the strip in order to avoid discontinuity in the growth of plants and possibly precise, that is limited to the breadth B of the strip so that all the material spread on the ground is effectively useful to its purpose, thus avoiding its waste.

**.** Hereinafter there can be used terms such as "on", "under", "upper", "lower", "high", "low" or the like; the skilled in the art will not have any difficulties in understanding that such terms are referred to a spreader in its normal operational arrangement, that is in use, as shown in the appended figures.

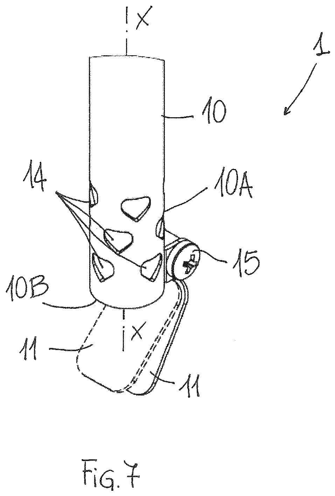

**.** As shown in figure 7, said spreader 1 comprises an elongated hollow member 10, extending along an axis X and open at both ends, defining an inner cavity through which the flow of the granular or micro-granular material to be spread on the ground can flow.

**.** Said hollow member 10 is adapted to be associated to the free end of a delivery conduit 50 connected to an apparatus, called micro-granulator, comprising a storage container wherein it is stored the granular or micro-granular material which is desired to spread on the ground and a dosage system for the same. Generally, said storage container is mounted onto a multi-purpose agricultural machinery, moveable in an advancement direction and capable of working on several rows; said delivery conduit 50 is preferably formed by two or more rectilinear or curved tubular portions which can be joined by means of flexible joints, so as to be able to have the delivery end in a position apt at spreading the granular or micro-granular material in the desired strip, independently from the agricultural machinery model whereon said micro-granulator is mounted. Clearly, adjusting the position of the spreader 1, in particular increasing or decreasing the distance of the delivery opening with respect to the ground, it is possible to determine the width of the spreading cone of the granular material to the ground and consequently its concentration.

**.** In particular, the spreader 1 according to the present invention is adapted to be associated to an apparatus for the controlled spreading of the granular material on the ground under gravity, as it is not provided with blowers for the forced flow of the granular material. Therefore, in this kind of agricultural machinery, at least the end portion of said delivery conduit 50 is preferably arranged vertically, with the free end basically oriented towards the ground, so as to ensure that the granular material reaches a sufficient expulsion speed, avoiding the unwanted occlusion of the same conduit; preferably the axis X of said hollow member 10, when the spreader 1 is associated to said delivery conduit 50, it will be essentially oriented along an essentially vertical direction X too.

. According to a very advantageous characteristic of the invention, said hollow member 10 is obtained in unitary piece with said delivery conduit 50.

. As already said, for constructive needs connected to the installation on complex agricultural machineries, it may happen that the delivery conduit 50 of the micro-granulator comprises one or more not rectilinear segments, within which the flow of the granular material is mainly gathered chiefly in a portion of the conduit section, adjacent to the wall; because of this, the flow of the material incoming into the hollow member 10 is not homogenously distributed within its section, and consequently the spreading on the ground is uneven. The same occurs when the delivery conduit and the hollow member have a polygonal section, for example square: the flow of the material would mainly gather in correspondence of the corners being unevenly distributed in the section of the hollow member.

. Therefore, preferably, at least an end portion 10A of said hollow member 10 has mainly a circular or elliptical cross-section and is provided with a plurality of protrusions 14 projecting from the inner perimeter surface towards a central area of said inner cavity in order to even the flow of the material before exiting said spreader 1.

. Thanks to the presence of said protrusions 14, the flow of the material possibly concentrated mainly in an area of the section of the hollow member 10, in correspondence of its wall, is distanced from the same to be conveyed basically towards a central area of the inner cavity and distributed so as to be spread with greater efficiency. In this way, advantageously, it is ensured an even spreading of the material in the breadth B of the discharging strip and homogeneous along the entire length L of the same strip.

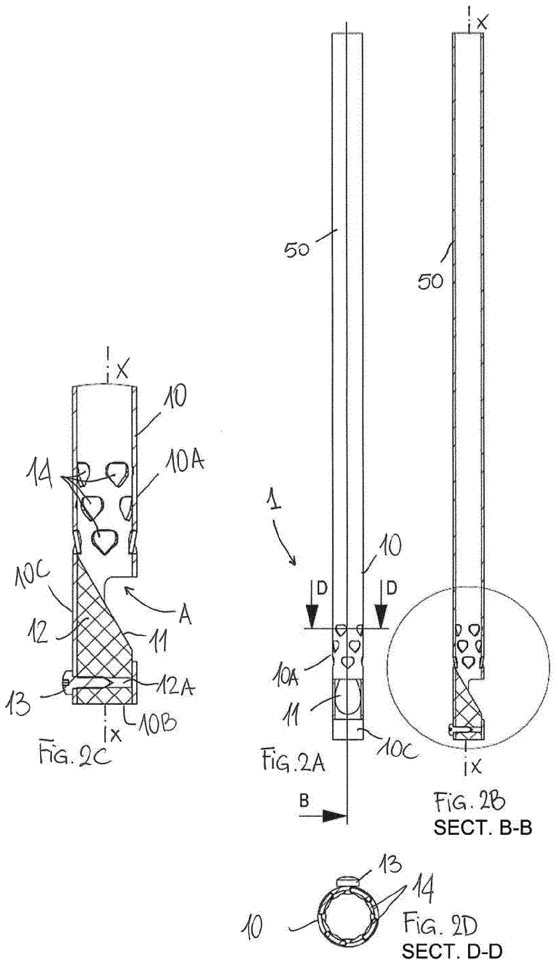

. Said protrusions 14 are preferably distributed peripherally along at least a segment of said end portion 10A and can advantageously be obtained from the material forming said hollow member 10, for example by embossing, that is by deforming the same material, or by punching, that is making differently shaped indentations, for example through laser cutting, and folding the indented portions towards the inner part of the hollow member 10 (figure 2D).

. Preferably, said protrusions 14 are variously distributed on said end portion 10A and can be arranged in a staggered or regular pattern along parallel rows. Also the shape, size, and inclination of said protrusions 14 can vary depending on the requirements.

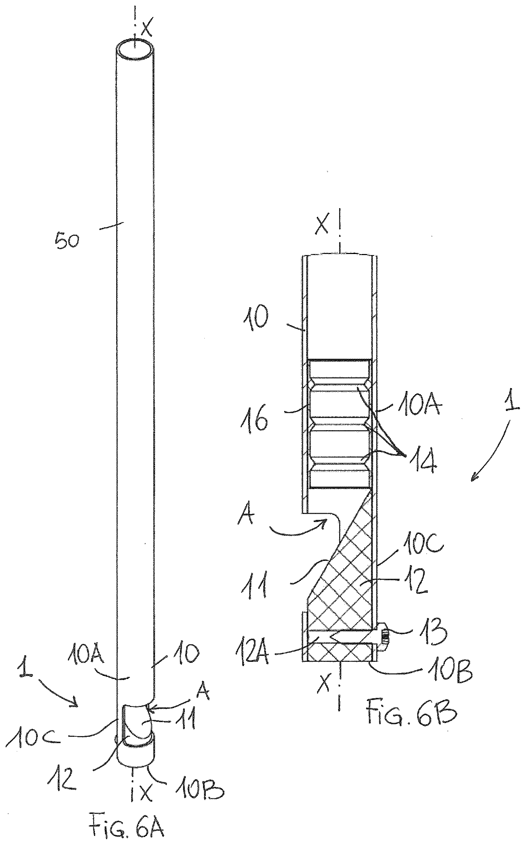

. Alternatively, as it can be observed in figures 6A and 6B, one or more shaped elements 16, for example ring-shaped, and comprising said protrusions 14 can be slidably inserted into the end portion 10A of said hollow member 10, said shaped elements 16 are advantageously arranged adhering to the inner surface of the hollow member 10 so that the protrusions 14 are projecting towards the inner part of the cavity.

. Otherwise, it is possible to provide a plurality of through openings on said end portion 10A by means of which it is possible to insert, from the outer part of the hollow member 10, a corresponding plurality of elements such as screws or pins projecting into the inner cavity in order to form said protrusions 14. Alternatively, in correspondence of said plurality of through openings it is possible to arrange, externally to the hollow member 10, a tubular element, for example over-injected (not shown), whereon said protrusions 14 are obtained adapted to penetrate through the through openings so as to project into the inner cavity.

. Said spreader 1 can further comprise an inclined surface 11 with respect to said axis X, arranged adjacent to said end portion 10A of said elongated hollow member 10 and adapted to receive the flow of the material passing through said elongated hollow member 10 and uniformly distributed by the protrusions 14, in order to spread it on the ground.

. In a particular not claimed embodiment, shown in figure 7, said inclined surface 11 is associated to said hollow member 10, in correspondence of said end portion 10A. Advantageously, said inclined surface 11 is articulated in an adjustable way about an articulation means 15, such as a pin, for example arranged externally with respect to said hollow member 10, extending along a perpendicular or crosswise direction with respect to said axis X.

. Therefore, in this case, the granular or micro-granular material passing through said hollow member 10 exits the end opening 10B of the end portion before falling onto the inclined surface 11 arranged externally with respect to said hollow member 10.

. Advantageously, acting on said articulation means 15, the inclination of said inclined surface 11 with respect to axis X can be adjusted according to the user's requirements. Moreover, as it is clearly understandable, if it is desired to change the shape of the inclined surface depending on specific needs of discharging on the ground, it is possible to remove the element supporting said inclined surface 11 replacing it with one provided with a suitably-shaped inclined surface 11.

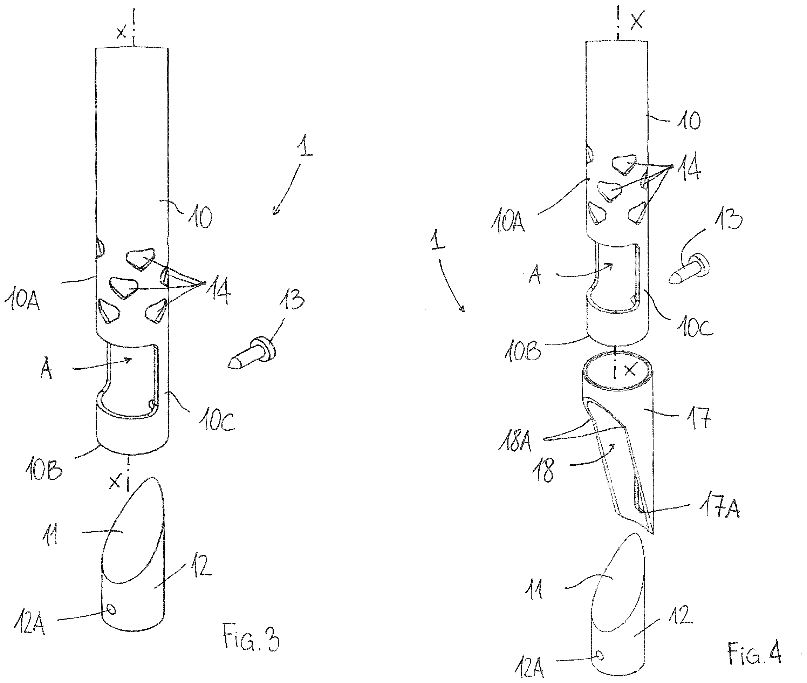

. Alternatively, according to a particularly advantageous characteristic, and as shown in figure 3, said inclined surface 11 is associated to a preferably solid body 12 such as an insert, insertable into the cavity defined by said hollow member 10 so that said inclined surface 11 is arranged adjacent to the end portion 10A.

. In particular, said hollow member 10 further comprises an extension portion 10C extending, without any interruptions, from said end portion 10A, and thus also extending the end opening 10B; said extension portion 10C is advantageously adapted to accommodate said insert 12. Preferably said insert 12 has a shape mainly conjugated with that of the cavity defined by the hollow member 10 and, once slidably inserted in the extension portion 10C, basically obstructs the end opening 10B, as shown in figures from 1A to 1C and from 2A to 2C.

. In particular said insert 12 is placed into the hollow member 10 so that said inclined surface 11 is facing a discharging opening A obtained on a wall of said extension portion 10C of said hollow member 10. Thus, in this case, the flow of the granular material passing inside said hollow member 10 hits against the inclined surface 11 provided there within, from where it exits to be spread on the ground.

. Fixing means 13, preferably removable such as a screw, are adapted to firmly maintain said insert 12 in the desired position inside the hollow member 10. Said screw 13 is inserted in a hole obtained on the wall of the hollow member 10, so that its stem, advantageously threaded, places itself according to an axis crosswise with respect to axis X and engages with the inner thread of a through hole 12A obtained in the insert 12. Alternatively, said insert 12 can be kept "snap" in its seat, preferably but not permanently, for example by means of an elastic tab.

. As it is apparent to the skilled in the art, a very advantageous aspect of a spreader 1 according to this embodiment lies in the fact that said inclined surface 11 is completely contained inside the hollow member 10, consequently avoiding external bulk and scarcely undergoing damages due to bumps against mechanical parts of the agricultural machinery.

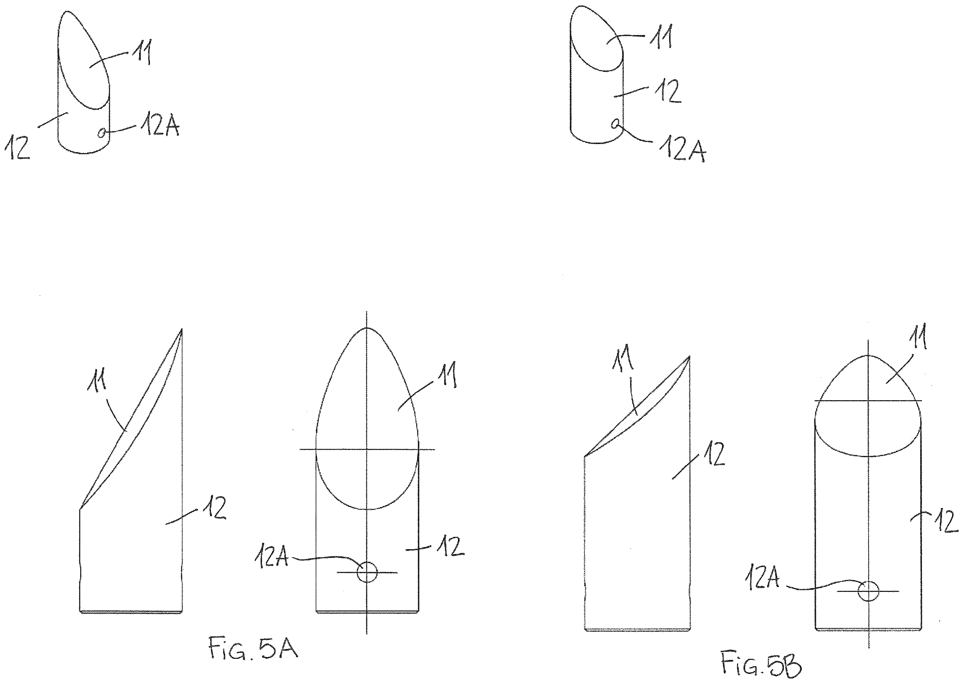

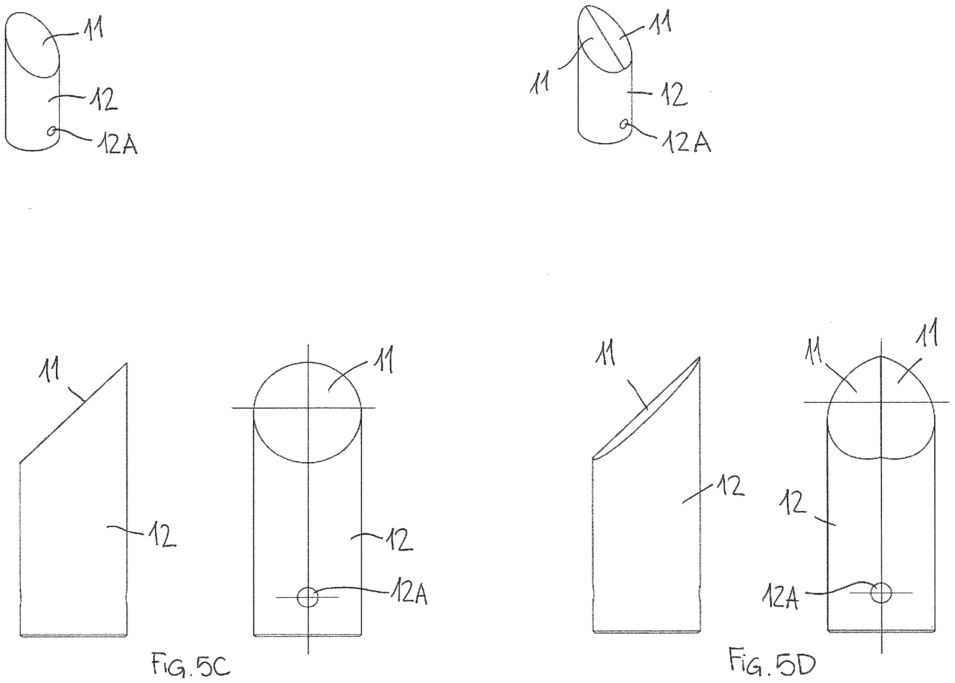

. In this case, in order to adjust the inclination of the inclined surface 11 or change its shape, it is possible to remove the insert 12 mounted on the hollow member 10 by operating on said screw 13 and replace it with an insert 12 provided with an inclined surface 11 having the desired characteristics. In fact, advantageously, as shown in figures 5A, 5B, 5C and 5D it is possible to provide interchangeable inserts 12, wherein at least an inclined surface 11 has a different angle with respect to axis X, thus changing its incline, or wherein the inclined surface 11 is not flat but, for example, it is variously shaped, concave or convex or more has an "overturned V" shape obtained joining two inclined surfaces 11 along a ridge portion, so as to change the distribution curve of the material on the ground along the breadth B of the strip.

**.** From tests on the field it has been seen that, on equal terms, the radial width of the discharging opening A affects the spreading angle of the granular or micro-granular product on the ground and hence the breadth B of the discharging strip. In fact, opening having a rather high radial width, for example of about 210°, allow an increase of the discharging breadth B, consequently decreasing the concentration of the material in particular in the lateral areas of the same strip, vice versa openings having a lower radial width, for example of about 150°, cause a decrease of the breadth B of the discharging strip, increasing the concentration of the granular material in the lateral areas.

**.** For this reason, as shown in figure 4, the discharging opening A can advantageously have a high radial width, and an adjusting element 17 having basically a cylindrical shape conjugated to the outer shape of the hollow member 10 and having a lateral opening 18, it can advantageously be externally associated to the hollow member 10 in order to adjust, and in particular in order to limit, the radial width of said opening A depending on the requirements.

**.** Advantageously, thanks to the cooperation between said screw 13 and an eyelet-like opening 17A obtained vertically on the wall of said adjusting element 17, the position of the latter is slidably adjustable along the outer surface of the hollow member 10 so as to partially close, to varying degrees, said discharging opening A in order to change its opening span and consequently control the breadth B of the spreading strip and the distribution of the product, modifying the amount spread in the central area with respect to the lateral areas.

**.** The edges 18A defining the lateral opening 18 of said adjusting element 17 can be variously shaped in order to obtain, using the same adjusting element 17, a plurality of adjustments of the discharging opening A: for example, as shown in figure 4, said lateral edges 18A can advantageously be inclined, allowing a continuous and progressive variation of the discharging opening A, or can be "step-like", in order to obtain discrete adjustments with openings of pre-set radial width.

**.** In conclusion, from the foregoing it is, therefore, apparent that the present invention achieves the expected objects and advantages. In fact, it has been devised a spreader for granular or micro-granular material capable of improving the spreading efficiency of the material on the ground, thus avoiding losses.

**.** In particular, thanks to the presence of said plurality of protrusions, projecting inside said hollow member 10, it is possible to spread the granular or micro-granular material on the ground homogenously along the entire length of the discharging strip.

. Furthermore, a spreader according to the invention is extremely versatile, as many of its components can be adjusted or modified also by the same user in an easy and immediate way according to the necessities, that is depending on the operational conditions and kinds of material to be spread on the ground.

. In fact, as a spreader according to the invention can advantageously comprise at least an inclined surface for the granular or micro-granular material which has an adjustable inclination and shape, the spreading of the same material on the ground can take place precisely within a strip having a determined breadth.

. Finally, as it is obvious to the skilled in the art, a spreader according to the present invention is very compact, consequently it is scarcely prone to bumps or damages.

. Of course the present invention is susceptible of a great number of applications, changes or modifications without exiting its protection field as set forth in the appended claims.

. Furthermore, the materials and equipment used to realize the present invention, as well as the forms and sizes of the single components, can be the most suitable depending on the specific requirements.

## Claims

1. Spreader (1) for spreading granular or micro-granular material on the ground under gravity, said spreader (1) comprising an elongated hollow member (10) extending along an essentially vertical axis (X) and defining an inner cavity through which said granular or micro-granular material can flow, said hollow member (10) being adapted to be associated with a delivery conduit (50) of a container wherein said granular or micro-granular material is stored, at least one end portion (10A) of said hollow member (10) has a substantially circular or elliptical cross section **characterized in that** said at least one end portion (10A) of said hollow member (10) is provided with a plurality of protrusions (14) projecting towards the inner cavity, said plurality of protrusions (14) being adapted to even the flow of said granular or micro-granular material before exiting said inner cavity, said plurality of protrusions (14) being provided on one or more shaped elements (16) insertable into said inner cavity, said spreader further comprising at least one inclined surface (11) with respect to said axis (X), said at least one inclined surface (11) being arranged adjacent to said end portion (10A) for receiving and deflecting the flow of said granular or micro-granular material in order to spread it on the ground, wherein said at least one inclined surface (11) is associated with a body (12) insertable into said hollow member (10) so as to be housed inside said hollow member (10), said body (12) being arranged such that said at least one inclined surface (11) is facing a discharging opening (A) obtained on a lateral wall of an extension portion (10C) of said end portion (10A).

2. Spreader (1) according to claim 1, wherein said plurality of protrusions (14) is peripherally arranged along at least a portion of said end portion (10A).

3. Spreader (1) according to claim 1, wherein an adjusting element (17) is slidably associable with the outer surface of said end portion (10A), said adjusting element (17) comprising a lateral opening (18) adapted to cooperate with said discharging opening (A) to adjust its radial width.

4. Spreader (1) according to claim 1, wherein said at least one inclined surface (11) is articulated to said end portion (10A).

5. Spreader (1) according to any of the preceding claims, wherein said at least one inclined surface (11) is essentially flat.

6. Spreader (1) according to any of the preceding claims, wherein said at least one inclined surface (11) is shaped.

## Patentansprüche

1. Streuvorrichtung (1) zum Streuen von granularem oder mikrogranularem Material mittels Schwerkraft auf den Boden, wobei die Streuvorrichtung (1) ein längliches hohles Element (10) umfasst, das sich entlang einer im wesentlichen vertikalen Achse (X) erstreckt und einen Innen-Hohlraum aufweist, durch den das granulare oder mikrogranulare Material strömen kann, wobei das hohle Element (10) zum Verbinden mit einer Abgabe-Leitung (50) eines Behälters eingerichtet ist, in dem das granulare oder mikrogranulare Material aufbewahrt wird, und wenigstens ein Endabschnitt (10A) des hohlen Elementes (10) einen im Wesentlichen kreisförmigen oder elliptischen Querschnitt hat, **dadurch gekennzeichnet, dass** der wenigstens eine Endabschnitt (10A) des hohlen Elementes (10) mit einer Vielzahl von Vorsprüngen (14) versehen ist, die auf den Innen-Hohlraum zu vorstehen, die Vielzahl von Vorsprüngen (14) so eingerichtet sind, dass sie den Strom des granularen oder mikrogranularen Materials vor dem Verlassen des Innen-Hohlraums glätten, die Vielzahl von Vorsprüngen (14) an einem oder mehreren geformten Element/en (16) vorhanden sind, das/die in den Innen-Hohlraum eingeführt werden kann/können, die Streuvorrichtung wenigstens eine in Bezug auf die Achse (X) geneigte Fläche (11) umfasst, die wenigstens eine geneigte Fläche (11) an den Endabschnitt (10A) angrenzend angeordnet ist, um den Strom des granularen oder mikrogranularen Materials aufzunehmen und abzulenken und ihn auf dem Boden zu verteilen, wobei die wenigstens eine geneigte Fläche (11) mit einem Körper (12) verbunden ist, der so in das hohle Element (10) eingeführt werden kann, dass er im Inneren des hohlen Elementes (10) aufgenommen ist, der Körper (12) so angeordnet ist, dass die wenigstens eine geneigte Fläche (11) einer Ableit-Öffnung (A) zugewandt ist, die sich an einer seitlichen Wand eines Verlängerungsabschnitts (10C) des Endabschnitts (10A) befindet.

2. Streuvorrichtung (1) nach Anspruch 1, wobei die Vielzahl von Vorsprüngen (14) am Rand an wenigstens einem Abschnitt des Endabschnitts (10A) angeordnet sind.

3. Streuvorrichtung (1) nach Anspruch 1, wobei ein Einstell-Element (17) verschiebbar mit der Außenfläche des Endabschnitts (10A) verbunden werden kann und das Einstell-Element (17) eine seitliche Öffnung (18) umfasst, die so eingerichtet ist, dass sie mit der Ableit-Öffnung (A) zusammenwirkt, um ihre radiale Breite einzustellen.

4. Streuvorrichtung (1) nach Anspruch 1, wobei die wenigstens eine geneigte Fläche (11) an dem Endabschnitt (10A) angelenkt ist.

5. Streuvorrichtung (1) nach einem der vorangehenden Ansprüche, wobei die wenigstens eine geneigte Fläche (11) im Wesentlichen plan ist.

6. Streuvorrichtung (1) nach einem der vorangehenden Ansprüche, wobei die wenigstens eine geneigte Fläche (11) geformt ist.

## Revendications

1. Épandeur (1) pour étaler par gravité un matériau granulaire ou micro-granulaire sur le sol, ledit épandeur (1) comprenant un élément creux (10) allongé s'étendant le long d'un axe (X) sensiblement vertical et définissant une cavité interne à travers laquelle ledit matériau granulaire ou micro-granulaire peut s'écouler, ledit élément creux (10) étant adapté pour être associé à un conduit de distribution (50) d'un récipient dans lequel ledit matériau granulaire ou micro-granulaire est stocké, au moins une partie d'extrémité (10A) dudit élément creux (10) ayant une section transversale sensiblement circulaire ou elliptique, **caractérisé en ce que** ladite au moins une partie d'extrémité (10A) dudit élément creux (10) est munie d'une pluralité de saillies (14) faisant saillie vers la cavité interne, ladite pluralité de saillies (14) étant adaptées pour uniformiser l'écoulement dudit matériau granulaire ou micro-granulaire avant de sortir de ladite cavité interne, ladite pluralité de saillies (14) étant prévue sur un ou plusieurs éléments profilés (16) pouvant être insérés dans ladite cavité interne, ledit épandeur comprenant en outre au moins une surface inclinée (11) par rapport audit axe (X), ladite au moins une surface inclinée (11) étant agencée de manière adjacente à ladite partie d'extrémité (10A) pour recevoir et dévier le flux dudit matériau granulaire ou micro-granulaire afin de l'épandre sur le sol, dans lequel ladite au moins une surface inclinée (11) est associée à un corps (12) pouvant être inséré dans ledit élément creux (10) de manière à être logé à l'intérieur dudit élément creux (10), ledit corps (12) étant agencé de telle sorte que ladite au moins une surface inclinée (11) fait face à une ouverture de décharge (A) obtenue sur une paroi latérale d'une partie d'extension (10C) de ladite partie d'extrémité (10A).

2. Épandeur (1) selon la revendication 1, dans lequel ladite pluralité de saillies (14) est agencée de manière périphérique le long d'au moins une partie de ladite partie d'extrémité (10A).

3. Épandeur (1) selon la revendication 1, dans lequel un élément de réglage (17) peut être associé de manière coulissante à la surface extérieure de ladite partie d'extrémité (10A), ledit élément de réglage (17) comprenant une ouverture latérale (18) adaptée pour coopérer avec ladite ouverture de décharge (A) pour ajuster sa largeur radiale.

4. Épandeur (1) selon la revendication 1, dans lequel ladite au moins une surface inclinée (11) est articulée sur ladite partie d'extrémité (10A).

5. Épandeur (1) selon l'une quelconque des revendications précédentes, dans lequel ladite au moins une surface inclinée (11) est essentiellement plate.

6. Épandeur (1) selon l'une quelconque des revendications précédentes, dans lequel ladite au moins une surface inclinée (11) est profilée.
